# EUROPEAN PATENT SPECIFICATION

(11) **EP 2 084 764 B1**
(45) Date of publication and mention of the grant of the patent: **23.11.2011**
(21) Application number: 07823987.8
(22) Date of filing: 02.10.2007
(51) Int. Cl.: H01M 2/28, H01M 10/04, H01M 10/12, H01M 2/10, H01M 2/14

(54) **A BATTERY AND A PROCESS FOR MAKING A BATTERY**
BATTERIE UND PROZESS ZUR HERSTELLUNG EINER BATTERIE
BATTERIE ET PROCÉDÉ DE FABRICATION D'UNE BATTERIE

(30) Priority: 02.10.2006 GB 0619444
(43) Date of publication of application: 05.08.2009
(73) Proprietor: EH Europe GmbH, 8001 Zürich (CH)
(72) Inventor: PARTINGTON, Kenneth, Lancashire PR3 3WS (GB); EVANS, Rhodri, Monmouthshire NP15 1HG (GB)
(74) Representative: Denness, James Edward
(86) International application number: PCT/GB2007/003730
(87) International publication number: WO 2008/040956

(56) References cited:
- EP-A- 0 545 399
- JP-A- 60 049 557
- US-A- 2 637 759
- US-A- 5 256 502
- US-B1- 6 960 408

## Description

### FIELD OF THE INVENTION

The invention relates to a battery, especially a lead acid battery, and to a process of making batteries.

### BACKGROUND TO THE INVENTION

Lead acid batteries typically comprise one or more cells with each cell having positive and negative plates separated by sheets of a porous insulating material. The manufacturing process for such batteries typically involves the following stages:
1) The positive and negative plates and the separators are assembled as required to form a plate stack. Each plate has a plate lug and in the plate stack the lugs of the plates of each polarity align to form two rows.
2) The plates of each polarity are connected together with a lead strap which runs along the respective row of lugs. The lead strap includes either a terminal post or a lead flag for connection to an adjacent cell.
3) The plate stack is then inserted into a battery container.
4) Where the battery includes more than one cell, and therefore has more than one plate stack, the flags of adjacent plate stacks are welded to each other through holes punched in the container.
5) A lid is heat-sealed onto the container.
6) The gaps between the lid and the terminal posts are sealed.
7) The battery is filled with acid, vent caps are put in place and other finishing steps are carried out.

The process steps may be changed in order to suit particular circumstances. For instance, in some cases the plate stack is inserted into the containers prior to the formation of the lead strap.

The plate/strap connection is made conventionally by either casting the strap in a first stage and then welding the individual plate lugs to that strap or by casting a lead strap directly onto the row of plate lugs. The casting process is usually automated, or semi-automated, by the use of a cast-on strap machine which collects individual plate stacks, inverts them, prepares the plate lugs for welding, pours lead into moulds and lowers the plate stacks so that each row of plate lugs dips into a mould and has a strap cast onto it. Cast-on strap machines are, however, typically both complex and costly and usually require further battery handling equipment before and after the cast-on strap machine to achieve the best production rates.

US 2,637,759 discloses a process for making a battery in which the cell covers include rows of slots such that when the covers are put in place the lugs of the plates extend through the slots and can be fused together by a burner. Rectangular connector bars also having slots for the lugs may be provided to provide additional metal and those connector bars may be moulded into the cell cover. However, US 2,637,759 notes that such moulding of the connector bars into the lid is not preferred because of the possible covering of the bars with a thin film of the moulding composition.

### SUMMARY OF THE INVENTION

The present invention provides a process for making a battery comprising the steps of:
i) assembling a plate assembly comprising at least one positive plate having a plate lug and at least one negative plate having a plate lug;
ii) positioning a lid comprising at least one metal insert having an outer surface and an inner surface and also having an aperture or apertures for the plate lug or lugs so that the plate lug or lugs of the positive or negative plate or plates extend into the aperture or apertures; and
iii) applying heat to at least a part of the outer surface of the or each metal insert thereby welding together the plate lugs which extend into the aperture or apertures and the metal insert,
wherein the peripheral regions of the metal insert which are in contact with the material of the body of the lid curve outwardly and have no sharp corners.

The outer surface of the metal insert is a surface which is on the external surface of the finished battery. Conversely, the inner surface of the metal insert is, in the finished battery, in the interior of the battery. Thus, in a traditional battery having a box-like container and a lid to fit on top of the box, the outer surface of the metal insert will be on the upper surface of the lid and the inner surface of the insert will be on the underside.

It will be appreciated that the battery of the invention may be used in any orientation, and the word 'lid' as used herein therefore encompasses any form of cover or lid on the battery container, whatever the orientation. The lid may therefore be present on the side, or the underside of the battery. As mentioned below, the plates may have lugs on more than one of their sides, and therefore the battery may have more than one lid. For example, the battery may have a lid on its upper and on its under surfaces.

Preferably, after step i) and before step ii) the plate assembly is inserted into a battery container. Preferably, after step ii) the lid is sealed to the box. Preferably, the welding involves application of a hot tool or application of a flame or a combination of both. Preferably, following the welding step, a protective coating is applied to the outer surface of the metal insert.

In one embodiment the process is a process for making a lead acid battery comprising the steps of:
i) assembling a plate stack comprising one or more positive plates, each having a plate lug, and one or more negative plates, each having a plate lug,
ii) inserting the plate stack into a battery box such that the plate lugs project from the box;
iii) placing a lid comprising a first metal insert having an aperture or apertures for the plate lug or lugs of the positive plates and a second metal insert having an aperture or apertures for the plate lug or lugs of the negative plates onto the box so that the plate lugs enter the apertures;
iv) sealing the lid to the box; and
v) welding the positive plate lug or lugs to the first metal insert and the negative plate lug or lugs to the second metal insert.

In one embodiment, the metal insert has:
i) one or more apertures for the insertion of the plate lug or lugs of the positive or the negative plate or plates of a plate assembly; and
ii) means for attaching a terminal cable.

Preferably, the aperture or apertures are open at both ends, that is, at the outer surface of the insert and the inner surface of the insert. Preferably, at least the portion of the insert in which the aperture or apertures are formed is made of a lead alloy. Preferably, the means for attaching a terminal cable is a brass or copper member. Preferably, the outer surface of the insert in the vicinity of the aperture or apertures is flat. Preferably, the apertures are slot-shaped.

Preferably, battery lid comprises first and second inserts.

The invention further provides a battery comprising:
one or more positive plates and one or more negative plates, the positive and negative plates each having a plate lug;
a container; and
a lid for the container which comprises at least one metal insert;
in which the plate lug or lugs of at least the positive or the negative plate or plates extend into the lid and are welded into the metal insert;
wherein the peripheral regions of the insert which are in contact with the material of the body of the lid curve outwardly and have no sharp corners.

Preferably, the battery is a 2 Volt lead acid battery. Preferably, the plate lugs extend to within 5mm of the outer surface of the or each metal insert. Preferably, the insert or inserts stand proud of the outer surface of the lid. Preferably, the number of positive plates is equal to the number of negative plates.

The welding of the plate lug or lugs to the metal insert is achieved by applying heat to the outer surface of the metal insert. Accordingly, the weld between the plate lug and the insert is in the vicinity of the outer surface of the or each insert.

The invention further provides a battery in which the lid comprises a body of non-conducting material having first and second openings and a first metal insert and a second metal insert fixed in the first and second openings, respectively, and in which the plate lugs of the positive plates extend into the first opening and are welded into the first insert and the plate lugs of the negative plates extend into the second opening and are welded into the second metal insert.

Preferably, the battery is a 2 Volt lead acid battery. Preferably, the plate lugs extend to within 5mm of the outer surface of the or each metal insert. Preferably, the insert or inserts stand proud of the outer surface of the lid. Preferably, the number of positive plates is equal to the number of negative plates.

In one embodiment the battery comprises:
i) a battery box;
ii) a plate stack inside the box comprising one or more positive plates each having a plate lug and one or more negative plates each having a plate lug,
ii) a lid for the box comprising a body of a non-conducting material and a first metal insert and a second metal insert fixed in first and second openings, respectively, in the body of the lid,
in which the plate lug or lugs of the positive plates extend from the plate stack into the first opening and are fused into the first insert and the plate lug or lugs of the negative plates extend from the plate stack into the second opening and are fused into the second metal insert.

In the processes of the invention the metal insert performs the function of the traditional plate strap and is fused to the plate lugs simply by welding. Any suitable welding process may be used. For example, the welding can be carried out using a modified post-burning machine, as described below. Post-burning machines are used in the conventional manufacture of some automotive batteries to selectively melt the upper part of the terminal posts together with a surrounding lead collar moulded into the lid, thereby sealing the gap between the post and lid. Post-burning machines are relatively simple and inexpensive, as compared to cast-on strap machines, and are more easily incorporated in an automated or semi-automated production line. Accordingly, the process of the invention may be simplified, as compared to the strap forming stage of the conventional manufacturing process. Furthermore, the height of the battery may in many cases be reduced as compared to conventional designs because there is no need to accommodate a cast on strap inside the battery container.

### DETAILED DESCRIPTION OF THE INVENTION

The process of the invention is especially suitable for the manufacture of lead acid batteries. Such batteries are used for a wide arrange of applications, including reserve power and motive power. In a preferred embodiment, the battery is a valve-regulated lead acid (VRLA) battery but the process of the invention is equally applicable to flooded cell batteries and motive power batteries.

The positive plates and negative plates may be any desired shape or size. The word "plate" refers to generally to any battery electrode. The invention is applicable to round cells, tubular batteries and bipolar batteries, as well as to batteries having conventional rectangular, flat plates.

The plate lugs may also be of any desired shape and size but are typically rectangular. The plate lugs are preferably somewhat longer than is conventional, in order that they extend to the part of the metal insert which is to be melted. The plate lugs may be at least 20mm long, optionally at least 25mm long, for example, at least 30mm long. In conventional lead acid batteries, it is usual for the plate lugs to be short, for example, less than 20mm long, in order to minimise the amount of material used and/or to minimise the overall height of the battery.

The positive and/or negative plates may each have more than one lug, for example, the plates may have two lugs each. (Batteries having two lugs per plate are known as "dual-tab" designs.) The "extra" lug may be at the top edge of the plate, or the bottom edge or conceivably on a side edge of the plate. Where the plates have a lug on the top and bottom edges, the battery may have two "lids" (top and bottom) each having at least one metal insert. Where the plates have two lugs on the top edge, the lid may include two inserts (one for each set of positive lugs) for the positive plate lugs or may include just one "positive" insert having two sets of apertures. It will be appreciated that such variations are within the scope of the invention.

In a preferred embodiment, the positive and negative plates are rectangular, with the plate lug of each plate extending from one of the short edges.

The plate assembly may be a plate stack. The plate assembly may be assembled using conventional methods, with positive and negative plates alternating. The plate assembly may also include one or more separators. The separators may also be of conventional design. For example, the plate assembly may include a glass fibre separator between each pair of opposing plates. Whilst it is possible for the plate assembly to include only one positive plate and one negative plate, the assembly will usually comprise a plurality of positive plates and a plurality of negative plates.

In the process of the invention, the lid of the battery includes at least one metal insert for connection to the plate lugs. The battery may include a mixture of conventional plate straps and connectors formed using an insert according to the process of the invention, for example, a conventional plate strap on the negative plates and a metal insert for the positive plates. In that case, the lid may include an odd number of inserts, for example, one insert. However, in order to realise the full benefits of the invention it is preferred that the lid includes two inserts for each cell of the battery, one for the positive plates and one for the negative plates. Preferably, the lid comprises first and second metal inserts, and the plate lug or lugs of the positive plate or plates extend into the aperture or apertures of the first metal insert and the plate lug or lugs of the negative plate or plates extend into the aperture or apertures of the second metal insert. In a preferred embodiment, the battery is a single cell 2V lead acid battery and the lid includes two metal inserts.

The container may be a conventional battery box. The battery container may have only a single compartment, for a single cell. Alternatively, the battery container may have multiple compartments, for a multi-celled battery. Such multi-celled batteries are known as "monobloc" batteries. The plate stack may be inserted into the battery container either before or after the lid has been positioned on to the plate stack. In a preferred embodiment, the plate stack is inserted into a container after step i) and before step ii), in order to keep the tooling simple.

Preferably, the battery container is provided with means for connection of the battery container to one or more similar battery containers. In that way, the batteries of the invention may be interconnected into groups to provide a higher voltage and/or a higher current capacity. For example, six 2-Volt batteries may be connected together to give a 12-Volt battery group. In that way, batteries of high voltage and/or current capacity may be achieved whilst keeping the lid design relatively simple. The means for connection may comprise projections and/or recesses on one or more external walls of the container.

In one embodiment the container is a container for a monobloc battery, for example, the container may have a number of compartments, each for a nominal 2V cell, giving a higher voltage battery (such as 4V, 6V, 8V, 10V, 12V, 16V, 24V, 48V). In that embodiment, the lid will have a corresponding number of inserts, preferably two inserts per cell compartment. Two or more of the inserts for the plates of each polarity may be connected together or made as a single piece. The required number of plate assemblies, one for each cell of the final battery, will preferably be arranged in position relative to each other (and more preferably inserted into their respective compartments in the container) prior to positioning the lid onto the plate assemblies.

Alternatively, the battery is a single-celled battery, especially a 2V lead acid battery. In that embodiment, the complexity of the lid is reduced, as compared to monobloc designs.

The lid will generally comprise a body, usually of a plastic material, in which the insert or inserts are fixed. For reasons of manufacturing simplicity, it is preferred that, when the lid includes more than one metal insert, those inserts are identical. In that respect, it is therefore also desirable in the battery of the invention for the number of positive plates in each cell to be the same as the number of negative plates in that cell, so that the numbers of plate lugs are the same. That is contrary to most conventional lead acid battery designs, which have tended to have one more or one less positive plate per cell than negative plates.

In conventional battery designs, the lugs of the positive plates are typically thicker than the negative plates because the positive plates are more subject to corrosion over the life of the battery. In the process of the invention the positive plates lugs may also be thicker then those of the negative plates, in which case the apertures provided in the metal insert for the positive plates may also be wider than those in the insert for the negative plates. Alternatively, the thickness of the lugs of the positive plates may be reduced, for example by grinding, or in the process of manufacturing the plates, to match the thickness of the lugs of the negative plates. Accordingly, in a preferred embodiment, at least the portions of positive plate lugs which enter the apertures are the same size and shape as the corresponding portions of the negative plate lugs, so that identical inserts may be used. Alternatively, the battery lid includes an insert of a first design for the positive plates and an insert of a second design for the negative plates. In that embodiment, the positive plate lugs do not need to be thinned down and different numbers of positive and negative plates can be accommodated.

The metal inserts will each have at least one aperture for their respective lugs. Each aperture may accommodate more than one plate lug or, alternatively, each aperture accommodates a single plate lug.

In one embodiment, the insert will include an aperture for each plate lug that is, each plate lug will enter its own dedicated aperture. The aperture or apertures will be sized, shaped and spaced apart so that where the lid is brought together with the plate assembly each plate lug will project into an aperture. Preferably, the apertures are sized and shaped such that they fit closely around the plate lugs so that they can be welded efficiently without being so tight that it becomes difficult to bring the lid and plate assembly together. For example, each insert may be provided with a row of apertures, each aperture being in the form of a slot, the length of the row being orthogonal to length of each slot. The lid and the plate assembly are brought together such that the plate lugs mate with the apertures. The apertures are open at the inner surface of the insert (the surface which faces the plate assembly in the assembled battery) to allow the plate lugs to enter. Preferably, the apertures are also open at the outer surface of the insert to allow the plate lugs to extend up to that outer surface. If the apertures are not open at the outer face of the insert then the apertures preferably extend close to, for example, within 5mm more preferably within 2mm, yet more preferably within 1mm of, the outer surface of the insert in order that they may welded from outside the battery assembly.

Alternatively, each aperture may accommodate multiple plate lugs. In that case, a secondary bushing may be provided which fits into the aperture around the plate lugs. The secondary bushing may be put in place before or after the lid has been fitted onto the plate assembly and before the welding step. Preferably, the secondary bushing is put in place on the plate lugs before the lid is fitted onto the plate assembly. The secondary bushing is preferably made of the same metal as the insert. During the welding, the lugs, the bushing and the insert will all be welded together.

In conventional battery manufacturing processes, it is often necessary to carefully align the plates in the plate assembly so that the plate lugs of each polarity line up into their respective rows before casting the straps in order to ensure that an adequate thickness of lead is cast around each lug. In the process of the present invention, if the apertures are not significantly larger than the plate lugs the plate lugs will be brought into close alignment as they enter the apertures, and so a separate alignment stage is not required. Advantageously, the apertures are so sized and shaped that, as the.plate lugs enter the apertures, the plates are brought into mutual alignment. For example, the inner walls of the apertures may taper together in a direction towards the outer surface of the insert, so that the lugs and the plates are progressively brought into alignment as they slide into the apertures, or the openings of the apertures on the inner face of the insert may have bevelled edges or to be rounded and/or have small ribs or pips to better locate the lugs. The lugs may also have chamfers at their upper ends to assist location in the apertures.

The metal insert may be any suitable size and shape. It should be sufficiently deep that the outer portion if it can be melted to provide the desired region of contact with the plate lugs without melting right through to the underside of the insert, thereby allowing the molten metal to drip into the interior of the battery. It should also be sufficiently long that it can accommodate all the plate lugs of the positive or negative plates in the plate stack. The peripheral regions of the insert which in the finished lid are in contact with the material of the body of the lid curve outwardly when viewed from outside the battery, rather than being straight or curved inwardly, and have no sharp corners in order that any shrinkage of the material of the body of the lid which occurs on moulding the lid around the insert draws the material of the lid tightly against the insert without concentrating stress. Preferably, the insert has no sharp corners in the regions which contact the material of the body of the lid. In a preferred form, the insert is generally rectangular or triangular, when viewed from outside the battery, with convexly curved sides.

Advantageously, the regions of the insert which contact the material of the body of the lid (typically the side faces of the insert) are profiled such that when the insert is moulded into the battery lid the interface between the metal of the insert and the material of adjacent parts of the lid provides a tortuous path to hinder the leakage of fluid from the battery. This helps to inhibit leakage of the battery contents through that interface.

The or each insert preferably includes means for attaching a terminal cable. The means for attaching a terminal cable can be any suitable shape, for example, it can be a simple

The or each insert preferably includes means for attaching a terminal cable. The means for attaching a terminal cable can be any suitable shape, for example, it can be a simple post or wing to which a cable may be clamped, or it may be a screw threaded member projecting from the insert to which a cable can be secured with a nut, or it may be an internally threaded recess into which a threaded cable connector can be screwed. The insert may be made of any suitable metal or combination of metals. Preferably, the means for attaching a terminal cable is a brass or copper member. For example, the metal insert may comprise a lead alloy moulding which includes the aperture or apertures and further comprise a brass or copper member moulded into and projecting from the lead alloy moulding.

The inserts may be made by die-casting, gravity casting, investment casting, machining or by any other suitable method.

In the welding step of the process of the invention, heat will preferably be applied to the insert from outside the battery assembly, typically from above to melt an upper part of the insert. Preferably, the upper surface of the insert in the vicinity of the aperture or apertures is flat. Preferably, the insert or inserts are each fixed in a respective opening in the body of the lid and those openings are sized and shaped so that all of the plate lugs for a particular insert extend into the opening so that they can be welded from outside the battery assembly. It is also preferable for the opening in the body of the lid to be so sized and shaped that an exposed portion of the insert extends around all the plate lugs with a sufficient margin around the plate lugs to avoid burning the body of the lid during the welding.

In many conventional batteries the end plates in the plate assembly press up against and are very close to the adjacent walls of the battery container. The lead straps are sized to fit within the container and so in order to provide sufficient thickness of lead straps around the lugs of the two end plates it is frequently necessary to bend those lugs inwards. That is either a time consuming manual operation or requires dedicated equipment and a process step to perform the task. In the process of the invention, that step may be avoided. In order to accommodate the plate lugs at the extreme ends of the plate assembly, the or each metal insert will preferably extend over at least one side wall of the battery container. In that case, the metal insert will be raised above the level of the seal between the lid and the container so that it does not interfere with that seal. Alternatively, the outermost apertures (i.e. the apertures which lie close to the side wall of the battery container) are shaped so that they bend the outermost lugs inwards as the lid is positioned on the plate assembly.

The insert or inserts may be fixed into the lid in any suitable way, for example, using an adhesive such as an epoxy resin. The or each insert may have a coating on at least part of its external surface to help it bond to the polymer during the moulding process. Preferably, the body of the lid is moulded around the insert or inserts to fix them in place. For example, for a lid having two inserts, the inserts will be placed in position in the moulding tool, the parts of the tool will close around the inserts and plastic material will be injected in to form the body of the lid around the inserts. The mould is cooled and then opened to release the lid. Where the lid is for a monobloc battery, the lid may comprise more than two metal inserts and may further comprise connections between two or more of the inserts, which may also be moulded into the lid. The body of the lid may be made from any suitable non-conducting material, for example, one of the plastic materials which are conventionally used for battery lids.

The lid will usually in addition to the inserts also comprise other features, as is conventional, for example, vents and handles.

In order to minimise the height of the battery, it is preferred that the metal insert is generally on a level with the upper surface of the body of the lid, although the insert will often be thicker than the upper part of the lid and may therefore stand proud of the upper surface of the lid. The welding joints between the plate lugs and the metal insert are preferably on a level with (that is, neither above or below) the interfaces between the insert and the body of the lid.

The lid may be fixed onto the battery container in a conventional way, for example, by adhesive or by heat sealing. Optionally, the lid is fixed to the container by heat sealing.

In the process of the invention, the plate lugs are welded to the metal insert (or to a secondary bushing as mentioned above which is also welded to the main insert). The term "welding" as used herein refers generally to methods in which the plate lugs and inserts are joined by fused metal. The welding may involve an external source of metal, such as solder. The welding may involve an electric arc. However, the welding step is preferably carried out by applying heat to an exposed upper surface of the insert to melt the metal of the insert and/or the plate lugs so that they fuse together. The heat may be applied in any suitable way, for example, by contact with a hot tool, or by application of a flame or by plasma welding. Preferably, the heating is restricted to the desired part of the metal insert and, for example, by application of a barrier member or a cooling tool to prevent overheating of the portions of the body of the lid close to the insert. The welding step may be carried out by a post-burning machine modified such that heat is applied to the desired portion of the insert. Thus, where the insert comprises a row of slot-like apertures for the plate lugs, the post-burner will apply heat to an area of the outer surface of the insert including and surrounding those apertures.

After the welding step, the upper surface of the metal insert is preferably sealed with a sealing material such as an epoxy resin to provide a secondary barrier to leakage.

The process of the invention may also include one or more finishing steps as is conventional, such as filling with electrolyte, charging, and the addition of vent caps.

It will be understood that references herein to "upper", "lower", "above", "below", "vertical", "horizontal" and similar terms in relation to the finished battery will be taken to refer to the battery when it is in its normal working orientation unless another meaning is clear from the context.

In one embodiment, the lid is located on the top of the battery. In that embodiment, the outer face of the metal insert will be its upper face and the inner face of the metal insert will be its underside, and the plate lugs will extend upwardly from the plate stack into the apertures of the metal insert.

### BRIEF DESCRIPTION OF THE FIGURES

Embodiments of the invention will now be described for the purpose of illustration only with reference to the figures, in which:
Fig. 1 shows a perspective view from above of a plate stack inside a battery container for use in the process of the invention;
Figs. 2a) and b) are perspective views from above and below, respectively, of a battery lid for use in the process of the invention;
Figs. 3a) and b) are perspective views, from above and below, respectively, of a metal insert for use in the battery lid of Figs. 2a) and b);
Fig. 4 is a perspective view of a battery of the invention including the container of Fig. 1 and the lid of Figs. 2a) and b);
Fig. 5 is a vertical cross-section through the upper part of the battery of Fig. 4;
Fig. 6 shows some parts of an alternative battery of the invention;
Figs. 7a and 7b are perspective views from above and below, respectively, of an alternative form of metal insert;
Figs. 8a and 8b are perspective views from above and below, respectively, of a battery lid including two metal inserts of the type shown in Figs. 7a and 7b;
Fig. 9 is a vertical cross-section through the upper part of a battery assembly including the lid shown in Figs. 8a and 8b; and
Fig. 10 is a perspective view of a finished battery assembly including the lid of Figs. 8a and 8b.

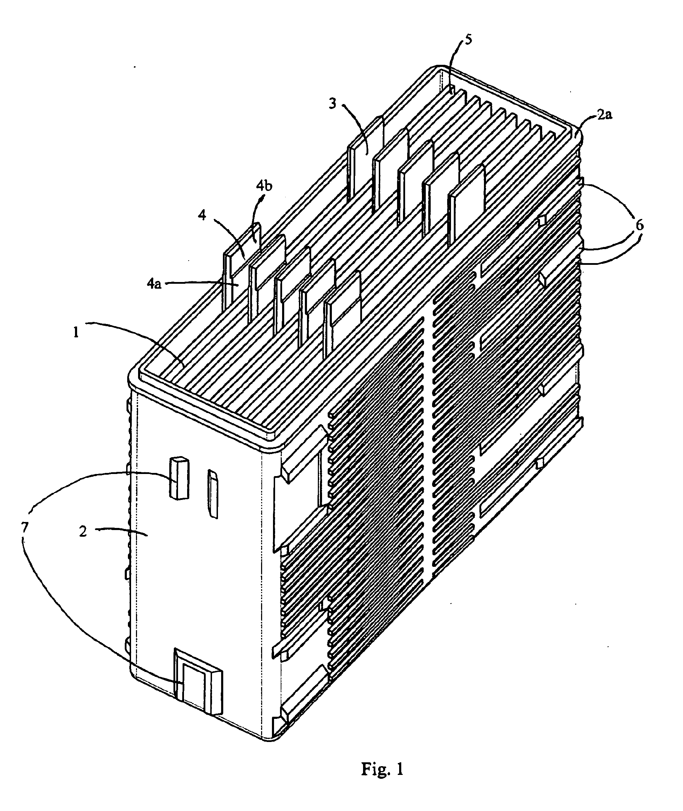

   Fig. 1 shows a partially assembled lead acid battery according to the invention comprising a plate assembly in the form of a plate stack 1 contained within a battery container 2. The plate stack 1 includes five positive plates and five negative plates which are stacked in the conventional alternating fashion. Each negative plate is provided with a negative plate lug 3 and each positive plate is provided with a positive plate lug 4. The main bodies of the positive and negative plates (not visible in Fig. 1) are of conventional rectangular construction. The plate stack 1 also comprises ten rectangular separators 5, made of glass wool. Packing pieces may be added at each end of the plate stack to space the stack from the end walls of the battery container, if desired.

The negative plate lugs are substantially identical, each being rectangular and projecting from the same place in the upper edge of each negative plate so that they form a row.

The positive plate lugs 4 are generally similar to the negative plate lugs 3 except that they each have a lower portion 4a of greater thickness (which corresponds to the thickness of the positive plate) and an upper section 4b which has been cast to the same thickness as the negative plate lugs 3. Each of the positive and negative plate lugs is longer than it is wide and projects above the level of the top of the container 2.

The container 2 is plastic battery box. It is open at the top and has a lip 2a around its upper edge upon which the container lid sits when in position, after heat sealing. The two long side faces of the container 2 are each provided with a pattern of horizontal grooves and ridges 6 which are designed to interlock with the corresponding recesses and projecting ridges of another, identical battery container. In that way, the battery container 2 shown in Fig. 1 may be fixed to another such battery container by sliding their long side faces together in a horizontal direction. Each end face of the container 2 is also provided with recesses and projecting ridges 7 for interlocking in a vertical direction with a corresponding battery box. In this way, a number of batteries can be connected together to make a larger battery group of greater voltage and/or current capacity.

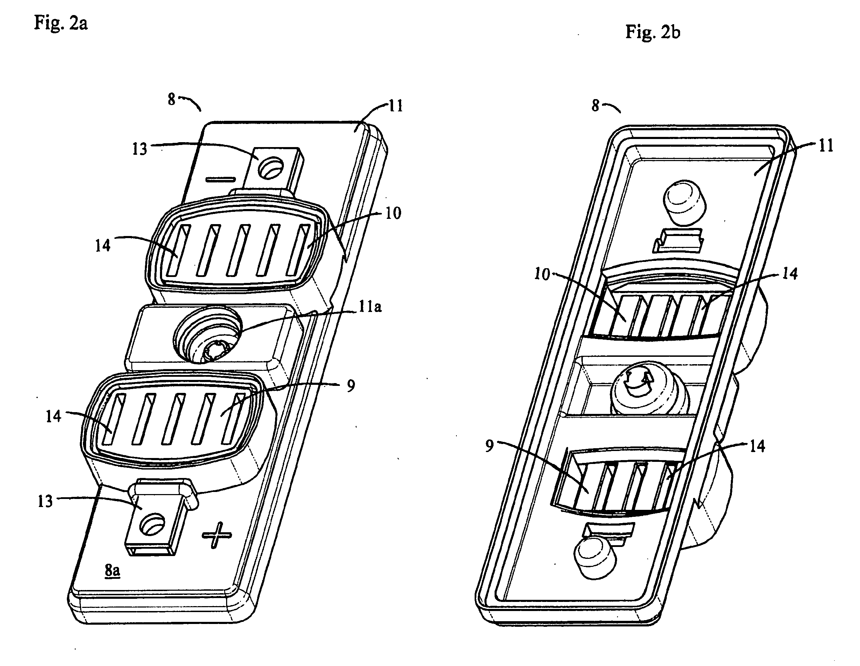

Figs. 2a and 2b show the upper and lower faces, respectively, of a lid 8 for use with the container of Fig. 1. The lid 8 is generally rectangular and comprises a first metal insert 9 for the positive plates and a second metal insert 10 for the negative plates. The two inserts 9 and 10 are moulded into the plastic body 11 of the lid 8 on either side of a central battery vent 11a. As can be seen from Figs. 2a) and b), the inserts 9, 10 are each slightly offset from the middle of the lid 2 such that the first insert 9 extends over one long edge of the lid 8 and the second insert 10 extends over the other long edge of the lid 8. The inserts 9, 10 stand proud of upper face 8a of the lid 8, with their upper and lower faces exposed.

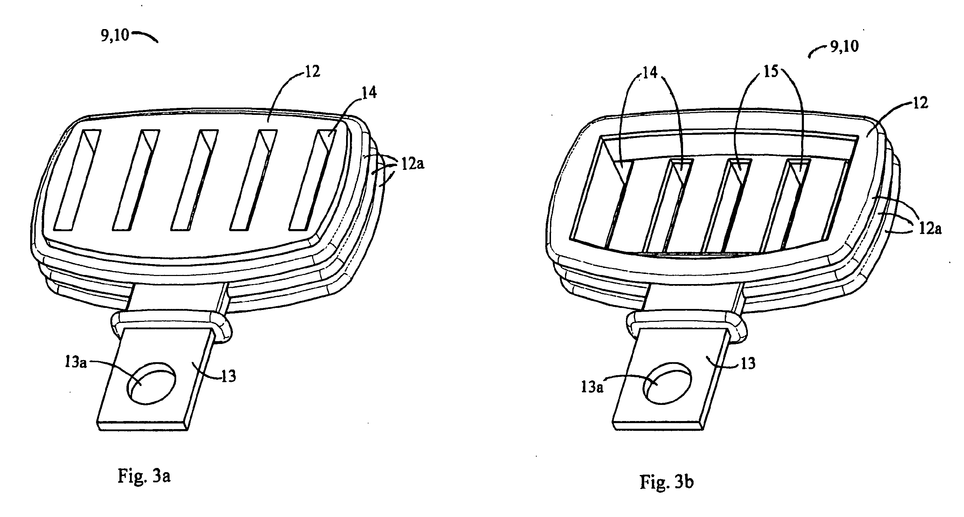

The metal inserts 9, 10 are identical in design. Figs. 3a) and 3b) show such an insert 9, 10 from above and below, respectively. The insert 9, 10 has a body 12 of lead alloy which is generally rectangular with sides which curve slightly outwards in a convex manner when viewed from above. The four corners of the insert are rounded, rather than sharp. The insert also comprises a rectangular brass tag 13 which projects from one of the long sides of the body 12. A round hole 13a is drilled in the tag 13 through which a terminal cable can be bolted to the tag 13.

The insert 9, 10 is made by positioning the tag 13 in a moulding tool and then moulding the lead body 12 onto one end of the tag 13.

The body 12 of the insert 9, 10 is provided with a row of five apertures 14. Each aperture 14 is in the form of a rectangular slot with the long sides of the slot being orthogonal to the row. The slots 14 are open on the upper face of the insert 9, 10. The central area of the underside of the insert 9, 10 is recessed, as shown in Fig. 3b, in order to reduce the amount of lead alloy used in the insert, and the slots 14 also open into that recessed area. The slots 14 are sized such that when a plate lug 3, 4 is inserted into the slot, there is a clearance of about 0.2mm between the walls of the slot and the lugs. As shown in Fig. 3b, the edges 15 around the slots 14 in the underside of the insert 9, 10 are slightly bevelled in order to help guide the plate lugs into the slots 14.

The sides of the body 12 of the insert 9, 10 are profiled with three ridges 12a which extend around the periphery of the insert.

The lid 8 is made by positioning first and second metal inserts 9, 10 in a moulding tool and injection moulding the plastic body 11 around them. The material of the body 11 shrinks as its cools, drawing it tightly around the metal inserts. The rounded corners of the inserts help to reduce the stress generated in the plastic body.

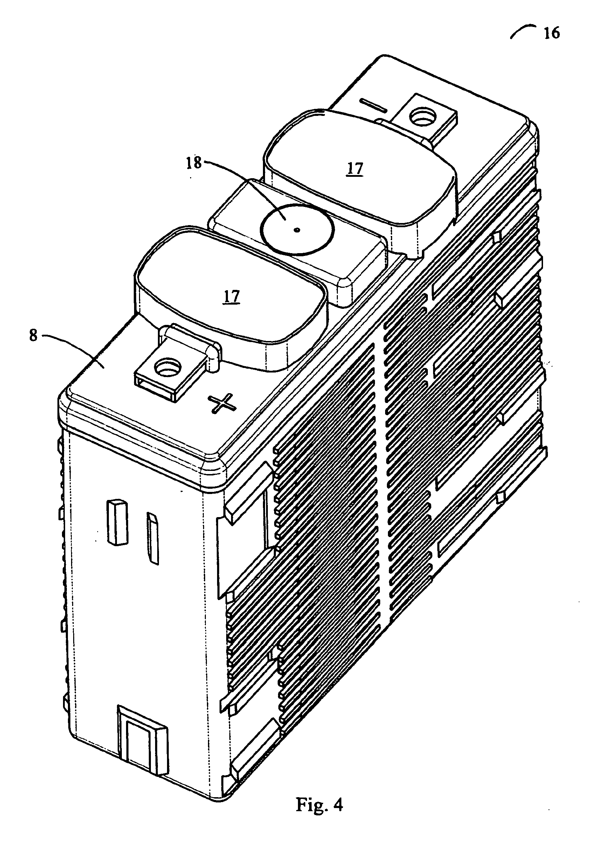

Figure 4 shows the finished 2V lead acid battery. The lid 8 has been heat sealed to the box 2, the plate lugs 3, 4 and the inserts 9, 10, have been welded together and a layer of epoxy resin has been applied to the upper surfaces of the metal inserts to form a hard coating 17 which acts as a secondary barrier to leakage. Also shown in Fig. 4 is a vent cap 18 which has been inserted into the vent 11a.

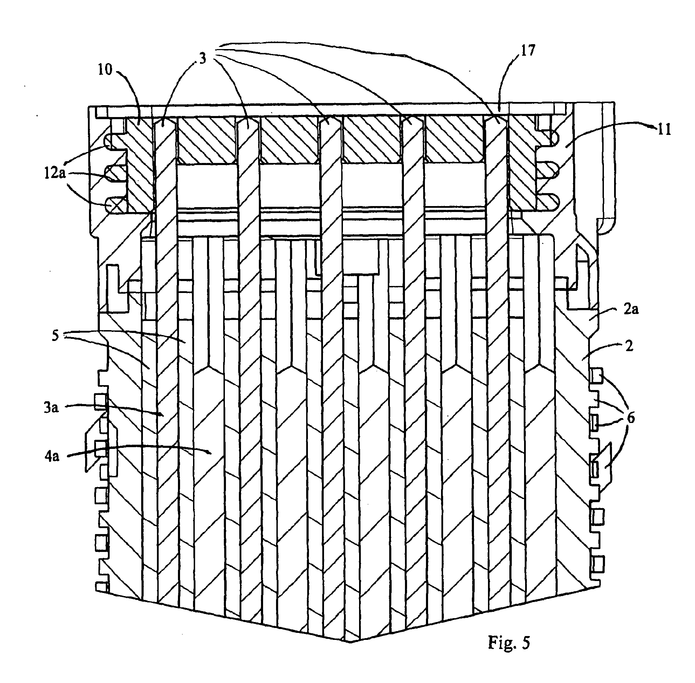

Figure 5 shows a partial cross-section through the top part of the battery of Fig. 5 including the second insert 10. For the sake of clarity, in Fig. 5 the insert 10 and the negative plate lugs 3 are shown separate, rather than welded together, and the electrolyte is not shown.

As can be seen in Fig. 5, the plate lugs 3 are sufficiently long that they extend up into the opening in the body 11 of the lid 8 in which metal insert 10 sits and in fact the upper ends of the lugs 3 are approximately flush with the upper surface of the insert 10. The fused areas (not shown) between the plate lugs 3 and the insert 10 are therefore also at the upper regions of the insert. It can also be seen that at its left hand extremity (as shown in Fig. 5), the body 12 of insert 10 extends over the left-hand wall of the container 2. Fig. 5 also shows the arrangement of and relative thicknesses of the negative plates 3a and positive plates 4a.

The battery of Figs. 1 to 5 is manufactured as follows.

Firstly the negative plates 3a, positive plates 4a and separators 5 are assembled in a conventional manner to form a plate stack. That plate stack is then inserted into a container 2 to form the assembly shown in Fig. 1.

The lid 8 is brought down onto the container box 2 such that each of the positive plate lugs 4 enters one of the slot-like apertures 14 of the first metal insert 9 and each of the negative plate lugs 3 enters an aperture 14 of the second metal insert 10. As the lid 8 moves down onto the lugs 3, 4 the plates are brought into alignment. The lid 8 is then heat sealed to the container box 2 in a conventional manner. The upper surface of each of the metal inserts 9, 10 is then heated with a modified post-burning machine to melt the upper 2 to 3 mm of the metal inserts 9, 10 and plate lugs 3, 4 thereby welding the respective lugs and inserts together. That welding both seals the gaps between the lugs and inserts and also brings the plates into electrical connection with each other and with the brass tags 13.

A sealing material such as an epoxy resin is then applied to the upper surface of the metal inserts 9, 10 and cured to form a coating 17. Electrolyte is then added to the battery via vent 11a and, after charging, a valve, a flame arrestor, and the vent cap 18 are put in place to give the finished battery.

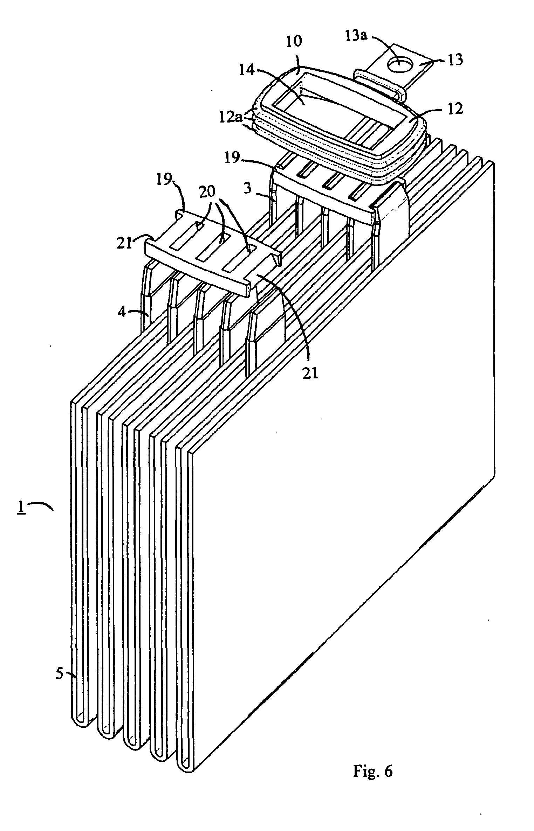

Fig. 6 shows a plate stack assembly 1 comprising five negative plates and five positive plates (the plates are not visible in Fig 6). Each of the negative plates is wrapped in a respective one of five flexible separators 5. A positive plate lug 4 projects from the upper edge of each of the positive plates and a negative plate lug 3 projects from the upper edge of each of the negative plates. The positive and negative plate lugs 4,3 are aligned in two rows. Fig. 6 also shows two secondary bushings 19 of identical design, one bushing 19 being slightly above the positive plate lugs 4 and the other bushing 19 sitting on the negative plate lugs 3.

Each bushing 19 is of generally rectangular shape and has three centrally arranged apertures 20 for accommodating the middle three plate lugs 4,3 of the respective row and a notch 21 at each end for accommodating the two outermost plate lugs 4,3. The three central apertures 20 and the notches 21 are spaced apart from each other on the underside of bushing 19 by a distance equal to the spacing between the plate lugs so that the each plate lug enters a respective aperture 20 or notch 21 as the bushing 19 is lowered onto the plate lugs. The notches 21 each taper inwards such that on the upper surface of the bushing 19 the distance between each notch 21 and its adjacent aperture 20 is less than the distance between the plate lugs, so that, at their upper ends, when the bushings 19 are first placed on the plate lugs 4,3, the upper parts of outermost plate lugs stand out from the notches 21.

Fig. 6 also shows a metal insert 10 (the rest of the lid is not shown for clarity) positioned above the negative plate lugs 3 and their associated bushing 19. That insert 10 has one central rectangular aperture 14 which generally corresponds in shape and size to the bushing 19. The outermost walls of that aperture 14 are angled slightly so that, as the lid is pushed down onto the plate stack 1, the upper portions of the outermost plate lugs are bent inwards so that they lie against the tapered face of the respective notch 21 (the outermost negative plate lugs 3 are shown in Fig. 6 in this bent-in position).

Once the lid has been placed on the plate stack 1 and container (not shown in Fig. 6) it is heat sealed to the container. The metal inserts 10, the secondary bushing 19 and the plate lugs 3,4 are then welded together and the battery is finished as described above in respect to the battery shown in Figs. 1 to 5.

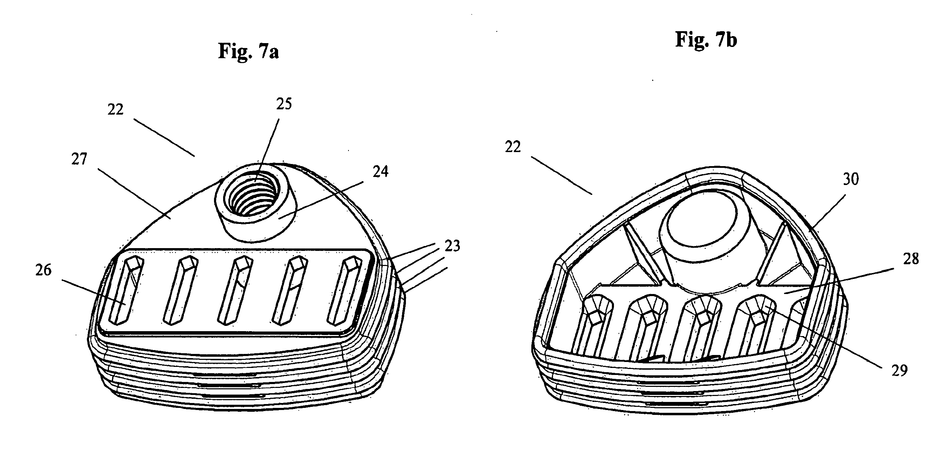

Figs. 7a and 7b show an alternative form of metal insert 22 for use in the process of the invention. Metal insert 22 is approximately triangular in shape with a rounded peripheral edge. That peripheral edge is provided with four laterally extending ribs 23 which provide a tortuous path when moulded into the plastic material of the battery lid. The insert 22 is provided with a pillar 24 which has an internal screw thread 25 by means of which it may be easily connected to a terminal cable. The insert 22 is also provided with a row of five slot-like apertures 26 which extend from the outer surface 27 of the insert through to the inner surface 28 of the insert. Each of those slots 26 is of the same shape and, as can be seen from Fig. 7a, has slightly pointed ends. At the inner, lower surface of the insert shown in Fig. 7b each slot is provided with a large bevelled shoulder 29 which assists in locating the plate lugs in the slots when the lid with the insert is positioned on top of the plate stack. As can also be seen from Fig. 7b the peripheral wall of the insert 22 is also provided with a downwardly projecting rib 30 which provides a further barrier to leakage of electrolyte from the battery when moulded into the plastic of the lid.

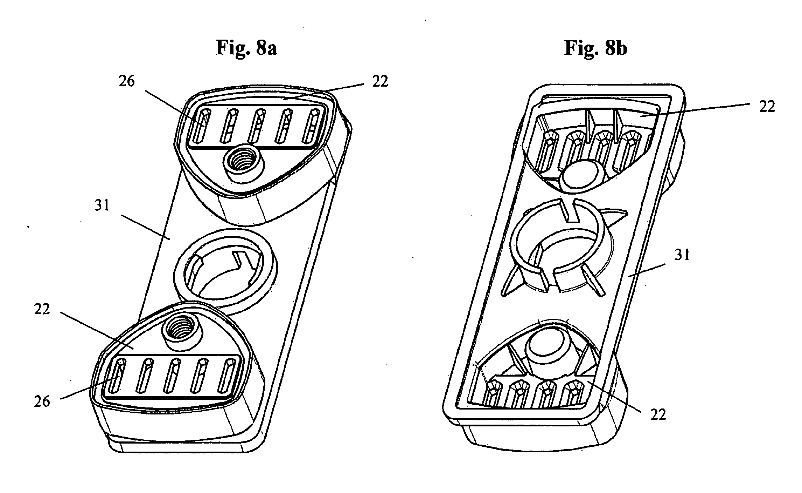

Figs. 8a and 8b show views from above and below respectively of a lid 31 which includes two inserts 22. As can be seen from Fig. 8a each of the inserts 22 is located in the lid 31 in such a way that the outer face 27 of the insert is exposed in the upper outer surface of the lid 31 so that when it is positioned on a plate stack with the plate lugs projecting into the apertures 26 the inserts can be welded to the plate lugs by application of heat to the outer surface 27 of the metal insert. The heat can be applied, for example, by a modified post-burner.

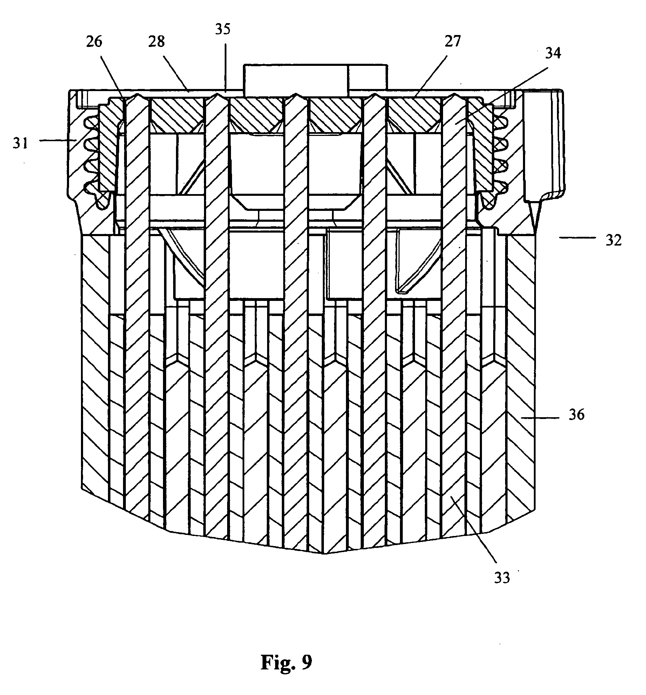

Fig. 9 shows a vertical section through the upper part of a battery assembly including the lid shown in Figs. 8a and 8b. As can be seen from Fig. 9 the battery 32 includes a stack of plates 33 each having a plate lug 34 which projects into one of the apertures 26 of the insert 22. Those plate lugs 34 will be welded to the metal insert by application of heat from above by a modified post-burner and, following cooling, a sealing layer of a suitable sealant such as an epoxy resin or a hot melt adhesive will be applied to the upper outer surface 27 of the metal insert 22. The lid 31 has been welded to a battery box 36 in which the plate stack 33 is contained.

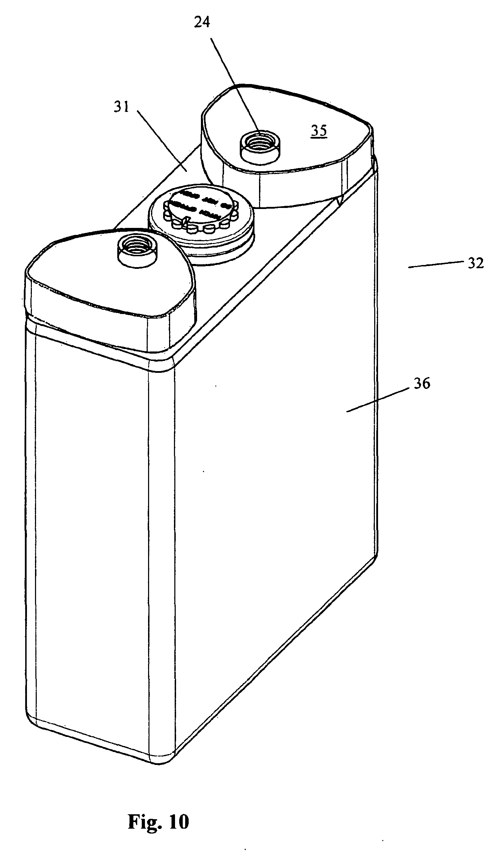

Fig. 10 shows a perspective view of the battery 32 in which the sealing layer 35 has been applied to the outer surfaces of the metal inserts 22.

In an alternative embodiment, the electrode plates of the battery are dual-tab plates with the tabs extending from both the upper and lower edges of the plates. In that embodiment, the battery will have a lid on the bottom of the battery, as well as on the top.

The above description has been given for the purpose of illustration only. The skilled person will appreciate that many variations within the invention are possible and for that reason the scope of the invention should be determining by reference to the appended claims.

## Claims

1. A process for making a battery comprising the steps of:
i) assembling a plate assembly (1) comprising at least one positive plate having a plate lug (4) and at least one negative plate having a plate lug (3);
ii) positioning a lid (8) comprising at least one metal insert (9, 10) having an outer surface and an inner surface and also having an aperture or apertures (14) for the plate lug or lugs (3, 4) so that the plate lug or lugs (3, 4) of the positive or negative plate or plates extend into the aperture or apertures (14); and
iii) applying heat to at least a part of the outer surface of the or each metal insert (9, 10) thereby welding together the plate lugs which extend into the aperture or apertures (14) and the metal insert (9, 10),
wherein the peripheral regions of the metal insert (9, 10) which are in contact with the material of the body of the lid (8) curve outwardly and have no sharp corners.

2. A process as claimed in claim 1 in which the lid (8) comprises first and second metal inserts (9, 10), and the plate lug or lugs (4) of the positive plate or plates extend into aperture or apertures (14) of the first metal insert and the plate lug or lugs (3) of the negative plate or plates extend into the aperture or apertures of the second metal insert.

3. A process as claimed in claim 1 or claim 2 in which the insert or inserts (9, 10) each include a plurality of apertures (14), and each aperture (14) accommodates a single plate lug (3, 4).

4. A process as claimed in any of claims 1 to 3 in which the insert or inserts (9, 10) each include a single aperture (14) for accommodating a plurality of plate lugs (3, 4) and in which a secondary bushing having a plurality of apertures (20) is fitted into the single aperture, around the plate lugs.

5. A process as claimed in any of claims 1 to 4 in which the lid includes more than one metal insert (9, 10) of identical design.

6. A process as claimed in any of claims 1 to 5 in which the aperture or apertures (14) are so sized and shaped that as the plate lugs (3, 4) enter the apertures (14), the plates are brought into mutual alignment.

7. A process as claimed in any of claims 1 to 6 in which the metal of the insert (9, 10) melts to a depth of less than 5mm.

8. A process as claimed in any of claims 1 to 7 in which the insert (9, 10) is rectangular or triangular, with convexly curved sides, when viewed from above.

9. A process as claimed in any of claims 1 to 8 in which the side faces of the insert (9, 10) are profiled such that, when the insert (9, 10) is moulded into the battery lid (8), the interface between the metal of the insert (9, 10) and the material of adjacent parts of the lid (8) provides a tortuous path to hinder the leakage of fluid from the battery.

10. A process as claimed in and of claims 1 to 9 in which the plurality of apertures (14) is arranged in a single row, the length of the row being orthogonal to the longest dimension of the apertures.

11. A battery comprising:
one or more positive plates and one or more negative plates, the positive and
negative plates each having a plate lug (3, 4);
a container (2); and
a lid (8) for the container which comprises at least one metal insert (9, 10);
in which the plate lug or lugs (3, 4) of the positive or the negative plate or plates extend into the lid (8) and are welded into the metal insert (9, 10), the welding process being one in which heat is applied only to the outer face of the metal insert (9, 10) such that only an outer portion of the metal insert (9, 10) is fused,
wherein the peripheral regions of the insert (9, 10) which are in contact with the material of the body of the lid curve outwardly and have no sharp corners.

12. A battery as claimed in claim 11 in which the lid comprises a first insert (9, 10) for the positive plates and a second insert (9, 10) for the negative plates.

## Patentansprüche

1. Verfahren zur Herstellung einer Batterie, mit den Schritten:
i) Montieren einer Plattenanordnung (1), die mindestens eine positive Platte mit einer Plattenfahne (4) und mindestens eine negative Platte mit einer Plattenfahne (3) aufweist,
ii) Positionieren eines Deckels (8), der mindestens einen Metalleinsatz (9, 10) aufweist, welcher eine äußere und eine innere Fläche hat und außerdem eine Öffnung oder Öffnungen (14) für die Plattenfahne oder -fahnen (3, 4) hat, auf solche Weise, dass sich die Plattenfahne oder -fahnen (3, 4) der negativen oder positiven Platte oder Platten in die Öffnung oder Öffnungen (14) erstrecken, und
iii) Anwenden von Wärme auf mindestens einen Teil der äußeren Fläche des oder jedes Metalleinsatzes (9, 10), wodurch die Plattenfahnen, welche sich in die Öffnung oder Öffnungen (14) erstrecken, und der Metalleinsatz (9, 10) zusammengeschweißt werden,
wobei die Randbereiche des Metalleinsatzes (9, 10), welche mit dem Material des Grundkörpers des Deckels (8) in Kontakt sind, nach außen gebogen sind und keine scharfen Kanten haben.

2. Verfahren nach Anspruch 1, bei welchem der Deckel (8) erste und zweite Metalleinsätze (9, 10) aufweist und sich die Plattenfahne oder -fahnen (4) der positiven Platte oder Platten in die Öffnung oder Öffnungen (14) des ersten Metalleinsatzes erstreckt bzw. erstrecken und sich die Plattenfahne oder -fahnen (3) der negativen Platte oder Platten in die Öffnung oder Öffnungen des zweiten Metalleinsatzes erstreckt bzw. erstrecken.

3. Verfahren nach Anspruch 1 oder 2, bei welchem der Einsatz oder die Einsätze (9, 10) jeweils eine Vielzahl von Öffnungen (14) aufweist bzw. aufweisen und jede Öffnung (14) eine einzelne Plattenfahne (3, 4) aufnimmt.

4. Verfahren nach einem der Ansprüche 1 bis 3, bei welchem der Einsatz oder die Einsätze (9, 10) jeweils eine einzelne Öffnung (14) zum Aufnehmen einer Vielzahl von Plattenfahnen (3, 4) aufweist bzw. aufweisen und bei welchem eine sekundäre Durchführung mit einer Vielzahl von Öffnungen (20) um die Plattenfahnen herum in die einzelne Öffnung eingepasst wird.

5. Verfahren nach einem der Ansprüche 1 bis 4, bei welchem der Deckel mehr als einen Metalleinsatz (9, 10) von identischer Bauart aufweist.

6. Verfahren nach einem der Ansprüche 1 bis 5, bei welchem die Öffnung oder die Öffnungen (14) derart bemessen und geformt sind, dass, wenn die Plattenfahnen (3, 4) in die Öffnungen (14) eintreten, die Platten aneinander ausgerichtet werden.

7. Verfahren nach einem der Ansprüche 1 bis 6, bei welchem das Metall des Einsatzes (9, 10) bis in eine Tiefe von weniger als 5 mm schmilzt.

8. Verfahren nach einem der Ansprüche 1 bis 7, bei welchem der Einsatz (9, 10) von oben betrachtet rechteckig oder dreieckig mit konvex gekrümmten Seiten ist.

9. Verfahren nach einem der Ansprüche 1 bis 8, bei welchem die Seitenflächen des Einsatzes (9, 10) derart profiliert sind, dass, wenn der Einsatz (9, 10) in den Batteriedeckel (8) eingeformt wird, die Grenzfläche zwischen dem Metall des Einsatzes (9, 10) und dem Material angrenzender Teile des Deckels (8) einen gewundenen Pfad bildet, um das Auslaufen von Fluiden aus der Batterie zu verhindern.

10. Verfahren nach einem der Ansprüche 1 bis 9, bei welchem die Vielzahl der Öffnungen (14) in einer einzigen Reihe angeordnet ist, wobei die Länge der Reihe orthogonal zur längsten Abmessung der Öffnungen ist.

11. Batterie mit:
einer oder mehr positiven Platte(n) und einer oder mehr negativen Platte(n), wobei die positive(n) und die negative(n) Platte(n) jeweils eine Plattenfahne (3, 4) haben,
einem Behälter (2) und
einem Deckel (8) für den Behälter, der mindestens einen Metalleinsatz (9, 10) aufweist,
wobei sich die Plattenfahne oder -fahnen (3, 4) der positiven oder negativen Platte oder Platten in den Deckel (8) erstrecken und in den Metalleinsatz (9, 10) geschweißt wird bzw. werden, wobei der Schweißprozess derart ausgeführt wird, dass Wärme nur auf die äußere Fläche des Metalleinsatzes (9, 10) angewendet wird, so dass nur ein äußerer Abschnitt des Metalleinsatzes (9, 10) geschmolzen wird,
wobei die Randbereiche des Einsatzes (9, 10), welche mit dem Material des Grundkörpers des Deckels in Kontakt sind, nach außen gebogen sind und keine scharfen Kanten haben.

12. Batterie nach Anspruch 11, bei welcher der Deckel einen ersten Einsatz (9, 10) für die positiven Platten und einen zweien Einsatz (9, 10) für die negativen Platten aufweist.

## Revendications

1. Procédé de fabrication d'une batterie comprenant les étapes consistant à :
i) assembler un ensemble de plaques (1) qui comprend au moins une plaque positive qui présente une cosse de plaque (4) et au moins une plaque négative qui présente une cosse de plaque (3) ;
ii) positionner un couvercle (8) qui comprend au moins un insert métallique (9, 10) qui présente une surface extérieure et une surface intérieure et qui présente une ou plusieurs ouvertures (14) pour la ou les cosses de plaques (3, 4) de telle sorte que la ou les cosses de plaques (3, 4) de la ou des plaques positives ou négatives s'étendent dans la ou les ouvertures (14) ; et
iii) appliquer de la chaleur à une partie au moins de la surface extérieure de chaque insert métallique (9, 10) en soudant de ce fait ensemble les cosses de plaques qui s'étendent dans la ou les ouvertures (14) et l'insert métallique (9, 10) ;
dans lequel les régions périphériques de l'insert métallique (9, 10) qui sont en contact avec le matériau du corps du couvercle (8) s'incurvent vers l'extérieur et ne présentent aucun coin anguleux.

2. Procédé selon la revendication 1, dans lequel le couvercle (8) comprend des premier et second inserts métalliques (9, 10), et la ou les cosses de plaques (4) de la ou des plaques positives s'étendent dans la ou les ouvertures (14) du premier insert métallique et la ou les cosses de plaques (3) de la ou des plaques négatives s'étendent dans la ou les ouvertures du second insert métallique.

3. Procédé selon la revendication 1 ou la revendication 2, dans lequel le ou les inserts (9, 10) comprennent chacun une pluralité d'ouvertures (14), et chaque ouverture (14) reçoit une seule cosse de plaque (3, 4).

4. Procédé selon l'une quelconque des revendications 1 3, dans lequel le ou les inserts (9, 10) comprennent chacun une ouverture unique (14) destinée à recevoir une pluralité de cosses de plaques (3, 4) et dans lequel une traversée secondaire qui présente une pluralité d'ouvertures (20) est ajustée dans l'ouverture unique, autour des cosses de plaque.

5. Procédé selon l'une quelconque des revendications 1 à 4, dans lequel le couvercle comprend plusieurs inserts métalliques (9, 10) qui présentent une conception identique.

6. Procédé selon l'une quelconque des revendications 1 à 5, dans lequel la ou les ouvertures (14) présentent une taille et une forme telles que lorsque les cosses de plaques (3, 4) pénètrent dans les ouvertures (14), les plaques sont amenées dans un alignement mutuel.

7. Procédé selon l'une quelconque des revendications 1 à 6, dans lequel le métal de l'insert (9, 10) fond jusqu'à une profondeur inférieure à 5 mm.

8. Procédé selon l'une quelconque des revendications 1 à 7, dans lequel l'insert (9, 10) est rectangulaire ou triangulaire, avec des côtés incurvés de manière convexe, quand on le regarde de dessus.

9. Procédé selon l'une quelconque des revendications 1 à 8, dans lequel les faces latérales de l'insert (9, 10) sont profilées de telle sorte, lorsque l'insert (9, 10) est moulé dans le couvercle de batterie (8), que l'interface entre le métal de l'insert (9, 10) et le matériau des parties adjacentes du couvercle (8) fournisse un chemin tortueux de façon à empêcher une fuite de fluide hors de la batterie.

10. Procédé selon l'une quelconque des revendications 1 à 9, dans lequel la pluralité d'ouvertures (14) sont agencées en une seule rangée, la longueur de la rangée étant orthogonale aux dimensions les plus longues des ouvertures.

11. Batterie comprenant :
une ou plusieurs plaques positives et une ou plusieurs plaques négatives, les plaques positives et négatives présentant chacune une cosse de plaque (3, 4) ;
un contenant (2) ; et
un couvercle (8) de contenant qui comprend au moins un insert métallique (9, 10) ;
dans lequel la cosse ou les cosses de plaques (3, 4) de la ou des plaques positives ou négatives s'étendent dans le couvercle (8) et sont soudées dans l'insert métallique (9, 10), le procédé de soudage étant un procédé où de la chaleur est appliquée seulement à la face extérieure de l'insert métallique (9, 10) de telle sorte que seule une partie extérieure de l'insert métallique (9, 10) fonde ;
dans lequel les régions périphériques de l'insert (9, 10) qui sont en contact avec le matériau du corps du couvercle s'incurvent vers l'extérieur et ne présentent aucun coin anguleux.

12. Batterie selon la revendication 11, dans lequel le couvercle comprend un premier insert (9, 10) pour les plaques positives et un second insert (9, 10) pour les plaques négatives.
